Europäisches Patentamt

European Patent Office

Office européen des brevets

(19)

(11) EP 0 819 741 A2

(12) EUROPEAN PATENT APPLICATION

(43) Date of publication:
21.01.1998 Bulletin 1998/04

(51) Int Cl.⁶: C09D 121/00, C08K 3/04,
B60C 1/00

(21) Application number: 97305293.9

(22) Date of filing: 16.07.1997

(84) Designated Contracting States:
AT BE CH DE DK ES FI FR GB GR IE IT LI LU MC
NL PT SE

(30) Priority: 16.07.1996 JP 186052/96
18.07.1996 JP 207876/96

(71) Applicant: Bridgestone Corporation
Tokyo (JP)

(72) Inventors:
• Komatsu, Hideki
 Kodaira City, Tokyo (JP)
• Naito, Yasuhiro
 Kodaira City, Tokyo (JP)

(74) Representative: Whalley, Kevin et al
 MARKS & CLERK,
 57-60 Lincoln's Inn Fields
 London WC2A 3LS (GB)

(54) **Electrically conductive rubber cement and pneumatic tire using the same**

(57) An electrically conducting rubber cement is formed by dissolving and uniformly dispersing a rubber composition comprising 40-100 parts by weight of a particular carbon black having a nitrogen adsorption specific surface area ($N_2SA$) of not less than 130 $m^2$/g and a dibutyl phthalate absorption (DBP) of not less than 110 ml/100 g based on 100 parts by weight of a diene rubber in an organic solvent, and applied to a given portion of a pneumatic tire to give an antistatic effect to the tire.

FIG_1

EP 0 819 741 A2

**Description**

This invention relates to an electrically conductive rubber cement and a pneumatic tire using the same, and more particularly to an electrically conductive rubber cement usable for preventing electrification of a pneumatic tire having a low conductive tread compounded with a great amount of a filler such as silica for the improvement of low fuel consumption as well as a pneumatic tire using the same.

The pneumatic tire provided with a tread having a lower fuel consumption, particularly a silica-containing tread is high in the electric resistance (i.e. $10^{13}$-$10^{14}$ $\Omega$) and low in the electric conductivity, so that static electricity generated from a vehicle body or a tire is hardly dissipated to ground surface through the tread and hence there are caused problems such as noise to radio, electric shock, spark and the like.

There are known the following methods for solving the above problems.

In a first method, carbon black different from that usually used in the tire and having an excellent electric conductivity is compounded with a tread rubber.

As a second method, there is a method of applying onto a surface of a tread an electrically conductive substance such as a water-based electrically conducting rubber cement containing an electrically conductive carbon black or the like during the extrusion of the tread in the production of the tire (e.g. see JP-A-8-120120). According to this method, even if a product tire after vulcanization is mounted onto a passenger car and run over a long time to wear a ground contact region of the tread, the electrically conducting substance still remains in side walls of many grooves forming a tread pattern of the ground contact region, which can dissipate static electricity charged in the whole of the tire to ground surface.

As a third method, an electrically conducting thin rubber sheet is inserted from a tread shoulder into an inside of a sidewall portion instead of the above rubber cement (see U.S. Patent No. 5,518,055).

However, all of these methods have problems in the production and quality as mentioned below and are not necessarily satisfied.

For example, when several parts by weight of the electrically conductive carbon black based on 100 parts by weight of rubber ingredient is added to a tread rubber for the tire, the electric resistance of the tread is lowered, but the low fuel consumption as a primary object of the tire is considerably degraded, while the carbon black itself is considerably low in the reinforcing effect for the polymer and hence there is caused a problem of lowering the wear resistance of the tire tread.

In the method of applying the water-based rubber cement containing the electrically conductive carbon black onto the surface of the tread cap rubber, there is a problem in the stationary stability of the cement itself and hence there is a fear of causing phase separation. Furthermore, it is required to use various stabilizers in order to prevent the blowing in the application, which degrades the durability of the resulting rubber cement film after the vulcanization and also results in the contamination of the mold for vulcanization. Moreover, the rubber composition used in the tread cap rubber is hydrophobic, so that when the above water-based rubber cement is applied onto the tread cap rubber, the drying takes a long time and the application unevenness is caused and hence the durability of the applied film is degraded. And also, the adhesion force at the boundary between the tread cap rubber and the film of the water-based rubber cement lowers and hence the boundary peeling is caused during the running of the tire, so that there is caused a problem that the antistatic effect is not obtained at the end stage of the running due to the breakage of electrically conductive path.

When the electrically conducting rubber sheet having a thickness of 1 mm to 200 $\mu$m is inserted into the inside of the sidewall portion from the tread shoulder as disclosed in U.S. Patent No. 5,518,055, considering the durability up to the running end stage, it is apt to cause the peeling phenomenon resulted from the difference in modulus of elasticity to the tread cap rubber and hence it is difficult to stably maintain the electric resistance of the tire at a low level up to the running end stage. Particularly, the wear resistance of the tread cap rubber is improved by using silica-containing rubber composition, but in order to maintain such an effect up to the running end stage, the wear resistance of the electrically conducting rubber sheet or the electrically conducting applied film should be improved to the same extent as in the tread cap rubber; otherwise the wearing of such rubber sheet or applied film is promoted during the running of the tire and finally only the tread cap rubber contacts with ground to break the electrically conductive path and hence the antistatic effect is not attained.

It is, therefore, an object of the invention to provide an electrically conducting rubber cement developing an excellent antistatic effect for a low fuel consumption pneumatic tire comprising an electrically low conductive tread compounded with a great amount of a filler such as silica and having a high stationary stability as well as a pneumatic tire coated therewith.

The inventors have made various studies in order to solve the aforementioned problems and found that the above object is achieved by applying an electrically conducting rubber cement, which is obtained by dissolving and uniformly dispersing a rubber composition containing a particular carbon black in an organic solvent, to a given place of a low fuel consumption pneumatic tire comprising an electrically low conductive tread to form a continuous coating film and as a result the invention has been accomplished.

According to a first aspect of the invention, there is the provision of an electrically conducting rubber cement being formed by dissolving and uniformly dispersing a rubber composition comprising 40-100 parts by weight of carbon black having a nitrogen adsorption specific surface area ($N_2SA$) of not less than 130 $m^2$/g and a dibutyl phthalate absorption (DBP) of not less than 110 ml/100 g based on 100 parts by weight of a diene rubber in an organic solvent.

In a preferable embodiment of the first aspect, a specific resistance of the rubber cement after the curing is not more than $10^6$ $\Omega \cdot$cm.

According to a second aspect of the invention, there is the provision of a pneumatic tire comprising a tread portion provided with a surface layer part of the tread portion having a specific resistance of not less than $10^8$ $\Omega \cdot$cm, in which an electrically conducting rubber cement formed by dissolving and uniformly dispersing a rubber composition comprising 40-100 parts by weight of carbon black having a nitrogen adsorption specific surface area ($N_2SA$) of not less than 130 $m^2$/g and a dibutyl phthalate absorption (DBP) of not less than 110 ml/100 g based on 100 parts by weight of a diene rubber in an organic solvent is applied onto the tread portion while contacting with an outer surface of the surface layer part and at least one member adjacent thereto in a radial direction of the tire to form a continuous coating film.

In a preferable embodiment of the second aspect, the member adjacent to the surface layer part is a wing or a sidewall portion.

In another preferable embodiment of the second aspect, the continuous coating film after vulcanization has a thickness of 20-60 μm.

In the other preferable embodiment of the second aspect, the electrically conducting rubber cement is applied to a joint of a tread rubber from an upper surface to a lower surface of the tread portion in a widthwise direction thereof at a thickness of 0.01-0.5 mm.

In a still further preferable embodiment of the second aspect, an electric resistance of the tire is not more than $10^7$ $\Omega$.

The invention will be described with reference to the accompanying drawings, wherein:

Fig. 1 is a diagrammatically left-half section view of an embodiment of the pneumatic tire according to the invention;

Figs. 2 and 3 are diagrammatically partial section views illustrating a position of applying an electrically conducting rubber cement, respectively;

Fig. 4 is a diagrammatically partial section view of another embodiment of the pneumatic tire according to the invention; and

Fig. 5 is a schematic view of an apparatus for measuring an electric resistance of a tire used in examples.

In the electrically conducting rubber cement according to the invention, it is preferable that at least one of styrene-butadiene rubber (SBR), butadiene rubber (BR) and natural rubber (NR) is used as a diene rubber from a viewpoint of the tire durability.

Further, carbon black having a nitrogen adsorption specific surface area ($N_2SA$) of not less than 130 $m^2$/g and a dibutyl phthalate adsorption (DBP) of not less than 110 ml/100 g is included in the rubber cement according to the invention. That is, the use of such a high structure carbon black improves the durability of the coating film forming an electrically conductive path and develops the antistatic effect up to the running end stage of the tire. Moreover, $N_2SA$ is measured according to ASTM D3037-89 and DBP is measured according to ASTM D2414-90.

When the amount of the carbon black compounded is less than 40 parts by weight based on 100 parts by weight of the diene rubber, the reinforcing action is insufficient, while when it exceeds 100 parts by weight, if the amount of the softening agent is small, the cured product becomes too hard and the cracking or the like is caused and if the amount of the softening agent is large, the wear resistance lowers. Moreover, the rubber cement according to the invention may properly be compounded with additives usually used in rubber articles such as vulcanizing agent, vulcanization accelerator, accelerator activator, softening agent, antioxidant and the like in addition to the carbon black.

Moreover, when the rubber ingredient constituting the electrically conducting rubber cement is SBR, if 50 parts by weight of carbon black is compounded based on 100 parts by weight of SBR, the specific resistance of the resulting rubber cement may be not more than $10^7$ $\Omega \cdot$cm.

In the rubber cement according to the invention, an organic solvent is used instead of water as a solvent. As the organic solvent, mention may be made of a good solvent having a solvent action to the polymer and having a boiling point of, preferably, not higher than 100°C, which includes, for example, hexane, petroleum ether, heptane, tetrahydrofuran (THF), cyclohexane and the like. Among them, the use of hexane is favorable.

The electrically conducting rubber cement according to the invention can be obtained by dissolving and uniformly dispersing a rubber composition kneaded by means of a Banbury mixer, rolls or the like in the organic solvent. The thus obtained rubber cement is preferable to have a specific resistance of not more than $10^6$ $\Omega \cdot$cm after the drying and curing through sulfur. When the specific resistance exceeds $10^6 \Omega \cdot$cm, the antistatic effect is insufficient.

Moreover, the specific resistance of the electrically conductive rubber cement is measured as follows.

That is, a cured sample sheet having a radius (r) of 25 mm and a thickness (t) of 2 mm is made from the electrically conductive rubber cement and then placed in a test box for the measurement of insulation resistance made by Advance Corporation to measure a sheet resistance (R). Next, the specific resistance $\rho$ ($\Omega$·cm) of the electrically conductive rubber cement is calculated according to the following equation using the measured values:

$$\rho = (\pi \times r^2/t) \times R$$

In the pneumatic tire according to the invention, the electrically conducting rubber cement is uniformly applied to the surface layer part of the tread portion having a specific resistance of not less than $10^8$ $\Omega$·cm while contacting with an outer surface of the surface layer part and at least one member adjacent thereto in a radial direction of the tire by brushing, spraying or the like to form a continuous coating film. As the member adjacent to the surface layer part, there are a wing (mini-side portion) and a sidewall portion. Moreover, the outer surface of the surface layer part includes a ground contact region of the tire in a side wall of a lug groove.

The continuous coating film after the curing is preferable to be 20-60 µm considering the durability up to the running end stage. When the thickness exceeds 60 µm, the peeling phenomenon is apt to be caused due to the difference of modulus of elasticity to the tread rubber and it is difficult to stably maintain the low value of electric resistance in the tire up to the running end stage, while when it is less than 20 µm, the formation of the electrically conductive path is insufficient.

Furthermore, the electrically conducting rubber cement according to the invention may be applied to a joint of the tread rubber over a full surface thereof at a thickness of 0.01-0.5 mm in the formation of the tread. In this case, the complexity in the formation of the tread can be avoided. Further, the continuous coating film made from the electrically conducting rubber cement is existent in a part of the tread on the circumference thereof, so that the tire uniformity is not influenced and the other tire properties are not damaged. Particularly, when the electrically conducting rubber cement has the same kind of the polymer and additives as used in the tread rubber composition containing silica, the adhesion between the rubber cement and the tread rubber is more improved.

When then thickness of the coating film is less than 0.01 mm, the charged static electricity can not sufficiently be discharged by the coating film made of the rubber cement, while when it exceeds 0.5 mm, not only the peeling but also the uneven wearing are apt to be caused in the joint.

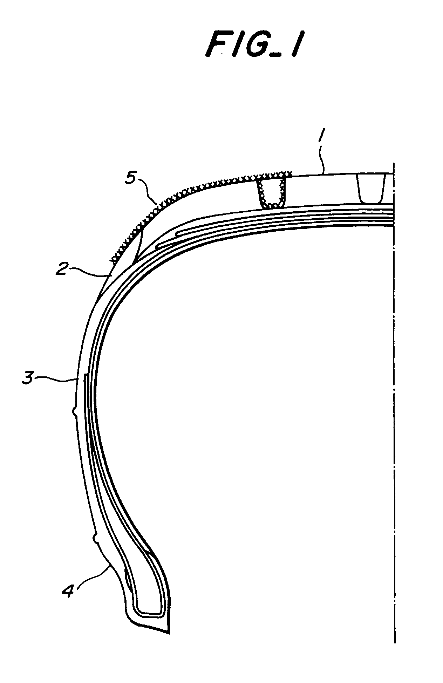

An example of electric resistance in the pneumatic tire according to the invention between ground surface and a rim will concretely be described with reference to Fig. 1.

In the pneumatic tire according to the invention, an electrically conducting rubber cement is applied to a region ranging from a part of an outer surface of a tread rubber 1 (inclusive of a groove formed in the tread rubber) to a part of an outer surface of a wing (i.e. mini-side) 2 to form an electrically conducting continuous coating film 5. Even if a specific resistance of the tread rubber is as high as $10^{11}$ $\Omega$·cm, when a specific resistance of the rubber cement is $10^5$ $\Omega$·cm, a specific resistance of the wing is $10^6$ $\Omega$·cm, a specific resistance of a sidewall portion 3 is $10^6$ $\Omega$·cm and a specific resistance of a bead portion 4 contacting with a rim flange (not shown) is $10^5$ $\Omega$·cm, an electrically conductive path of ground surface $\rightarrow$ tread rubber $\rightarrow$ wing $\rightarrow$ sidewall portion $\rightarrow$ bead portion $\rightarrow$ rim flange $\rightarrow$ vehicle body is formed through the electrically conducting continuous coating film 5, whereby the electric resistance of the tire can be maintained at a low value irrespectively of the specific resistance of the tread rubber. In case of the pneumatic tire having no wing, the similar effect can be obtained by applying the electrically conducting rubber cement to a part of an outer surface of the sidewall portion near to the tread rubber to form an electrically conductive path from the tread rubber to the sidewall portion. In any case, it is favorable that the value of electric resistance between ground surface and rim based on the above path is not more than $10^7$ $\Omega$ from a viewpoint of the antistatic effect.

The following examples are given in illustration of the invention and are not intended as limitations thereof.

Examples 1-2 and Comparative Examples 1-4

Various tread rubbers and electrically conducting rubber cements A-C used in the pneumatic tire are prepared according to a compounding recipe as shown in Tables 1-3.

Table 1

| Tread Rubber (unit: parts by weight) | |
|---|---|
| Styrene-butadiene rubber *1 | 96 |

Note)
*1: SBR1712, trade name, made by Japan Synthetic Rubber Co., Ltd.

Table 1 (continued)

| Tread Rubber (unit: parts by weight) | |
|---|---|
| Butadiene rubber *2 | 30 |
| $SiO_2$ *3 | 60 |
| Carbon black (N234) *4 | 20 |
| Silane coupling agent *5 | 6 |
| ZnO | 3 |
| Stearic acid | 2 |
| Aromatic oil | 10 |
| Vulcanization accelerator (CBS) *6 | 1.5 |
| Vulcanization accelerator (DPG) *7 | 2 |
| Sulfur | 1.5 |

*2: 96% cis-bond

*3: Nipsil VN3

*4: $N_2SA$: 126 $m^2$/g, DBP: 125 ml/100g

*5: Si69 made by Degussa

*6: N-cyclohexyl-2-benzothiazyl sulfenamide

*7: diphenyl guanidine

Table 2

| (unit: parts by weight) | | |
|---|---|---|
| | Organic cement (A) | Organic cement (B) |
| Natural rubber | 40 | 40 |
| Styrene-butadiene rubber *8 | 60 | 60 |
| Carbon black (N134) *9 | 60 | - |
| Carbon black (N330) *10 | - | 65 |
| Aromatic oil | 15 | 15 |
| ZnO | 2 | 2 |
| Antioxidant *11 | 1 | 1 |
| Vulcanization accelerator (DPG) | 0.2 | 0.2 |
| Vulcanization accelerator (NS) *12 | 0.8 | 0.8 |
| Sulfur | 1.5 | 1.5 |
| Hexane | 500 | 500 |

Note) *8: SBR1500, trade name, made by Japan Synthetic Rubber Co., Ltd.

*9: $N_2SA$: 146 $m^2$/g, DBP: 127 ml/100g

*10: $N_2SA$: 83 $m^2$/g, DBP: 102 ml/100g

*11: N-(1,3-dimethylbutyl)-N'-phenyl-p-phenylene diamine

*12: N-tert-butyl-2-benzothiazolyl sulfenamide

Table 3

| Water-based cement (unit: parts by weight) | |
|---|---|
| Natural rubber latex | 100 *13 |
| Dispersion of carbon black | 100 *14 |

Note) *13: about 60% by weight of rubber content, pH = about 11

*14: aqueous dispersion containing 20% by weight of carbon black

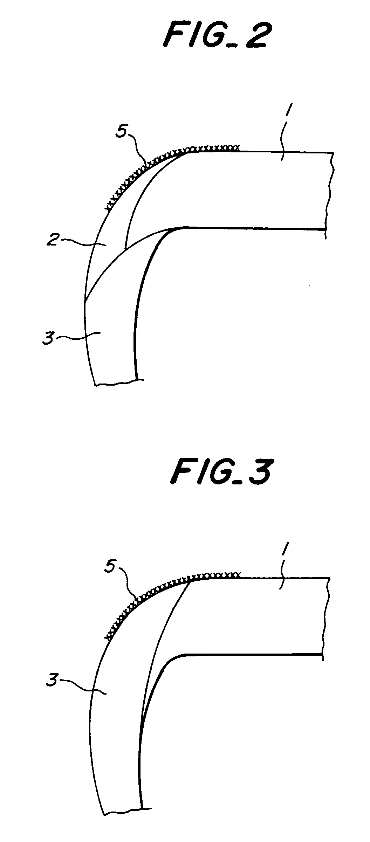

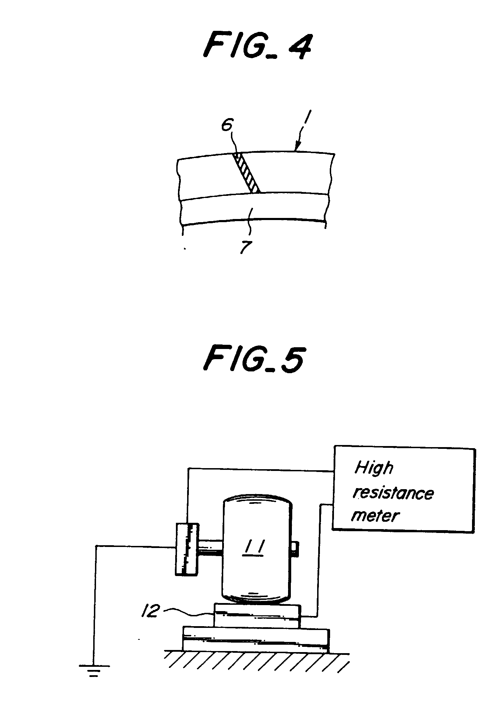

Two kinds of pneumatic tires having a tire size of 185/70R14 are manufactured by applying each of the above rubber cements A-C to a position 5 as shown in Figs. 2 and 3, respectively. In the new tires after vulcanization, the thickness of the electrically conducting continuous coating film made from the rubber cement is shown in Table 4. Further, the electric resistance of each of these tires is measured according to WdK 110 Sheet 3 of German Association of Rubber Industry by placing an assembly 11 of a test tire and a rim on a steel plate 12 and then flowing electric current of 1000 V between the rim and the steel plate to read electric resistance by means of a high resistance meter as shown in Fig. 5. The measured values of electric resistance in new tire and after the running over distances of 10000 km and 40000 km are also shown in Table 4. Moreover, all of the rubber cements A-C have a specific resistance of $10^6$ $\Omega \cdot$cm as measured by the aforementioned measuring method.

EP 0 819 741 A2

## Table 4

| | Comparative Example 1 | Example 1 | Example 2 | Comparative Example 2 | Comparative Example 3 | Comparative Example 4 |
|---|---|---|---|---|---|---|
| Kind of rubber cement | – | A | A | B | B | C |
| Position of rubber cement applied | – | Fig. 2 | Fig. 3 | Fig. 2 | Fig. 3 | Fig. 2 |
| Thickness of electrically conducting film in new tire ($\mu$m) | 0 | 30 | 30 | 30 | 30 | 60 |
| Electric resistance ($\Omega$) — new tire | $10^{10}$ | $10^6$ | $10^6$ | $10^6$ | $10^6$ | $10^6$ |
| Electric resistance ($\Omega$) — after the running over 10,000 Km | $10^{11}$ | $10^6$ | $10^6$ | $10^6\sim10^7$ | $10^6\sim10^7$ | $10^7\sim10^9$ |
| Electric resistance ($\Omega$) — after the running over 40,000 Km | $10^{11}$ | $10^6$ | $10^6$ | $10^7\sim10^{10}$ | $10^9\sim10^{10}$ | $10^{10}$ |

In Comparative Examples 2-4, the scattering on the value of the electric resistance after the running over 10000 km or 40000 km is considerably large in accordance with a measuring point on the circumference of the tire, so that a range of electric resistance measured on four points is shown in table 4.

As seen from Table 4, all of the rubber cements develop an effect of decreasing the electric resistance in a new tire.

In Comparative Examples 2 and 3, a low value of electric resistance is maintained irrespectively of the presence or absence of the wing in the tire after the running over 10000 km though there is a slight scattering, but the scattering range of electric resistance on the circumference of the tire after the running over 40000 km becomes large and the electric resistance rises to $10^{10}\,\Omega$ in a certain measuring point. This shows that the electrically conducting path existing over a full circumference of the tire at an initial running stage is intercepted in a certain ground contact region at the running end stage to lose the effect of the rubber cement applied. That is, a low and constant value of electric resistance can not be maintained at the running end stage in the tires of Comparative Examples 2 and 3.

In Comparative Example 4, the interception of the electrically conducting path is observed at a faster stage as compared with Comparative Examples 2 and 3, which results from the lowering of adhesion property at the boundary between the water-based cement and the tread rubber rather than the disappearance of the rubber cement gauge.

In Examples 1 and 2, the electric resistance of $10^6\,\Omega$ is maintained even after the running over 40000 km irrespectively of the presence or absence of the wing in the tire. This shows that the electrically conducting path made from the rubber cement is well maintained even at the running end stage.

Examples 3-6 and Comparative Examples 5-6

A tread rubber and an electrically conducting rubber cement are prepared according to a compounding recipe shown in Table 5, which are used to manufacture a pneumatic tire having a tire size of 155SR13. As shown in Fig. 4, the rubber cement is applied to a free end portion of the tread rubber to be joined at both ends at a thickness shown in Table 6. In Fig. 4, numeral 1 is a tread, numeral 6 a coating of the rubber cement and numeral 7 a belt.

After each of these tires is run on a drum over a distance of 40000 km, the electric resistance is measured in the same manner as described in Example 1 to obtain results as shown in Table 6. In this case, the voltage applied is 1000V in Example 3 and Comparative Examples 5-6 and 100V in Examples 4-5. Moreover, in order to acurately measure the antistatic effect of the tire, the coating of the rubber cement located in the joint of the tread rubber is placed so as to contact with the steel plate.

Table 5

| | Tread rubber | Electrically conducting rubber cement | | | |
|---|---|---|---|---|---|
| | | Comparative Example 6 | Example 3 | Example 4 | Examples 5, 6 |
| SBR | 96.25 | 96.25 | 96.25 | 96.25 | 96.25 |
| BR | 30 | 30 | 30 | 30 | 30 |
| ZnO | 3 | 3 | 3 | 3 | 3 |
| Stearic acid | 2 | 2 | 2 | 2 | 2 |
| Silica | 85 | 60 | - | - | - |
| C/B (ISAF) | - | 25 | 85 | - | - |
| C/B (acetylene black) | - | - | - | 85 | - |
| C/B (Ensaco250E) *1 | - | - | - | - | 85 |
| Aromatic oil | 20 | 20 | 20 | 20 | 20 |
| Antioxidant *2 | 1.0 | 1.0 | 1.0 | 1.0 | 1.0 |
| Vulcanization accelerator *3 | 1.2 | 1.2 | 1.2 | 1.2 | 1.2 |
| Sulfur | 1.5 | 1.5 | 1.5 | 1.5 | 1.5 |
| Silane coupling agent *4 | 8.5 | 6.0 | - | - | - |

*1: trade name made by MMM

*2: N-phenyl-N'-isopropyl-p-phenylenediamine

*3: N-oxydiethylene-2-benzothiazole sulfeneamide

*4: Si69 made by Degussa

Table 5   (continued)

| | Tread rubber | Electrically conducting rubber cement | | | |
|---|---|---|---|---|---|
| | | Comparative Example 6 | Example 3 | Example 4 | Examples 5, 6 |
| Specific resistance ($\Omega \cdot$cm) | $10^{10}$ | $10^8$ | $10^6$ | $10^5$ | $10^5$ |

In the above three carbon blacks, the specific resistance is 228 $\Omega \cdot$cm in ISAF, 30 $\Omega \cdot$cm in acetylene black and 6 $\Omega \cdot$cm in Ensaco 250E, respectively.

Table 6

| | | Comparative Example 5 | Comparative Example 6 | Example 3 | Example 4 | Example 5 | Example 6 |
|---|---|---|---|---|---|---|---|
| Thickness of coating made from rubber cement (mm) | | 0 | 0.5 | 0.05 | 0.05 | 0.05 | 0.5 |
| Electric resistance ($\Omega$) | new tire | $10^{10}$ | $10^9$ | $10^7$ | $10^6$ | $10^6$ | $10^6$ |
| | after the running over 40,000 Km | $10^{11}$ | $10^{10}$ | $10^8$ | $10^8$ | $10^7$ | $10^7$ |

As mentioned above, when the electrically conductive rubber cement according to the invention is applied to a given place of a pneumatic tire comprising a tread portion made from a tread rubber containing a low conductive silica, it develops an excellent antistatic effect up to a running end stage of the tire and has a high leaving stability. Further, the shape ability and the like of the tire can be improved without degrading the properties inherent to the tire such as wet performances, wear resistance and the like. Moreover, when the coating of the rubber cement is located in the joint of the tread rubber, the static electricity charged in the vehicle body can intermittently be discharged every the contact of the coating with ground during the running of the tire.

## Claims

1.  An electricity conducting rubber cement being formed by dissolving and uniformly dispersing a rubber composition comprising 40-100 parts by weight of carbon black having a nitrogen adsorption specific surface area ($N_2SA$) of not less than 130 m$^2$/g and a dibutyl phthalate absorption (DBP) of not less than 110 ml/100 g based on 100 parts by weight of a diene rubber in an organic solvent.

2.  An electrically conducting rubber cement as claimed in claim 1, characterized in that the specific resistance of the rubber cement after curing is not more than $10^6$ $\Omega \cdot$cm.

3.  A pneumatic tire comprising a tread portion (1) provided with a surface layer part of the tread portion having a specific resistance of not less than $10^8$ $\Omega \cdot$cm, in which an electrically conducting rubber cement formed by dissolving and uniformly dispersing a rubber composition comprising 40-100 parts by weight of carbon black having a nitrogen adsorption specific surface area ($N_2SA$) of not less than 130 m$^2$/g and a dibutyl phthalate absorption (DBP) of not less than 110 ml/100 g based on 100 parts by weight of a diene rubber in an organic solvent is applied onto the tread portion (1) while contacting with an outer surface of the surface layer part and at least one member (2,3) adjacent thereto in a radial direction of the tire to form a continuous coating film (5).

4.  A pneumatic tire as claimed in claim 3, characterized in that the member adjacent to the surface layer part is a wing (2) or a sidewall portion (3).

5.  A pneumatic tire as claimed in claim 3 or 4, characterized in that the continuous coating film after vulcanization has a thickness of 20-60 $\mu$m.

6.  A pneumatic tire as claimed in any of claims 3 to 5, characterized in that the electrically conducting rubber cement is applied to a joint of a tread rubber from an upper surface to a lower surface of the tread portion in a widthwise direction thereof at a thickness of 0.01-0.5 mm.

7. A pneumatic tire as claimed in any of claims 3 to 6, characterized in that the tire has an electric resistance of not more than $10^7$ $\Omega$.

## FIG_1

## FIG_2

## FIG_3

*FIG. 4*

*FIG. 5*

High resistance meter